# EUROPÄISCHE PATENTANMELDUNG

(11) **EP 0 753 651 A1**
(43) Veröffentlichungstag der Anmeldung: **15.01.1997**
(21) Anmeldenummer: 96110106.0
(22) Anmeldetag: 22.06.1996
(51) Int. Cl.: F01N 3/28, F01N 7/08

(54) **Abgasanlage einer Mehrzylinder-Brennkraftmaschine**

(30) Priorität: 08.07.1995 DE 19524980
(71) Anmelder: ADAM OPEL AG, 65423 Rüsselsheim (DE)
(72) Erfinder: Von Brand, Heinz-Ewo, Dipl.-Ing., 55545 Bad Kreuznach (DE)
(74) Vertreter: Kümpfel, Heinz, Dipl.-Ing.

(57) **Zusammenfassung**

Die Erfindung betrifft eine Abgasanlage einer Mehrzylinder-Brennkraftmaschine, deren Abgase zumindest während der Startphase wirkende Startkatalysatoren (12) und einen Hauptkatalysator (16) durchströmen. Die Abgase werden in Nähe der Zylinder in zumindest zwei Leitungssträngen (6, 7) geführt, in welche die Startkatalysatoren (12) eingesetzt sind und die sich zu einem gemeinsamen Abgasrohr (15) vereinen, in welchem der Hauptkatalysator (16) eingesetzt ist. Die Startkatalysatoren (12) befinden sich in einem gemeinsamen Gehäuse (8), welches mit einem Einlaufteil (9) die Gasströme aus den Leitungssträngen (6, 7) mittels einer Trennwand (11) getrennt auf einen oder mehrere Wabenkörper des Startkatalysators (12) aufteilt und mit einem Endteil (10) auch wieder getrennt abnimmt. Damit kann der Wärmeverlust an den Startkatalysatoren (12) erheblich reduziert werden, so daß die Katalysatoren beim Kaltstart schneller auf Betriebstemperatur kommen und anspringen. Gleichzeitig reduziert sich der Bauaufwand für eine Abgasanlage mit Startkatalysatoren.

## Beschreibung

Die Erfindung betrifft eine Abgasanlage einer Mehrzylinder-Brennkraftmaschine nach dem Oberbegriff des Anspruches 1.

Aus der DE-OS 39 30 380 ist es bekannt, in einer Abgasanlage in allen von den Zylinderköpfen ausgehenden Abgasleitungen in Nähe der Brennkraftmaschine kleinvolumige Startkatalysatoren vorzusehen, wobei diese Abgasleitungen in ein gemeinsames Abgasrohr einmünden, welches einen Hauptkatalysator enthält.

Nach dieser Druckschrift ist es auch bekannt, die Startkatalysatoren in Gruppensammelrohren anzuordnen, so daß ein Startkatalysator von den Abgasen einer Zylindergruppe, beispielsweise einer Zylinderbank eines Boxermotors, beaufschlagt ist. Nachteilig ist bei einer solchen Abgasanlage, daß der Montageaufwand für den Einbau der einzelnen Startkatalysatoren gegenüber einer Abgasanlage ohne Startkatalysator oder einer Abgasanlage mit einem einzigen parallel geschalteten Startkatalysator erheblich anwächst. Ein weiterer Nachteil besteht darin, daß die Oberfläche eines kleinvolumigen Startkatalysators relativ groß ist im Vergleich zu einem größervolumigen Katalysator und daß dadurch der kleinvolumige Startkatalysator relativ viel Wärme über seine Oberfläche verliert, so daß sich seine Startzeit und damit auch die Startzeit des Hauptkatalysators dadurch wieder verlängert.

Es ist Aufgabe der Erfindung, eine Abgasanlage nach dem Oberbegriff des Anspruches 1 zu schaffen, welche mit vergleichsweise geringem Aufwand, insbesondere in einem Kraftfahrzeug, montierbar ist und die nur geringe Wärmeverluste an den Startkatalysatoren hat, so daß sowohl die Startkatalysatoren als auch der Hauptkatalysator schneller auf Betriebstemperatur kommen.

Erfindungsgemäß wird diese Aufgabe gemäß den Merkmalen des Anspruches 1 gelöst.

Durch die Vereinigung der Startkatalysatoren in einem gemeinsamen Gehäuse liegt ein erheblicher Teil der äußeren Oberfläche jedes einzelnen Startkatalysators innerhalb des Gehäuses und an der äußeren Oberfläche des benachbarten Startkatalysators an. Der Wärmeverlust von den Startkatalysatoren wird damit insgesamt stark reduziert, so daß die Startkatalysatoren schneller als bei einzelner Anordnung anspringen und deren Reaktionswärme sich förderlich auf das Anspringen des Hauptkatalysators auswirkt.

Das gemeinsame Gehäuse kann relativ nahe an den Zylindern der Brennkraftmaschine angeordnet werden, so daß dem Abgas auf dem Weg von den Zylindern zu den Startkatalysatoren wenig Wärme verloren geht.

Durch die Vereinigung aller Startkatalysatoren in einem Gehäuse, welches unmittelbarer Bestandteil der Abgasanlage ist und mit dieser vorgefertigt werden kann, reduziert sich gegenüber einer Einzelmontage von Startkatalysatoren der Montageaufwand erheblich.

In besonders vorteilhafter Weise können die Startkatalysatoren innerhalb des gemeinsamen Gehäuses von einem einheitlichen Wabenkörper gebildet sein, welcher durch das Einlaufteil des Gehäuses sowie durch dessen Endteil mit voneinander getrennten Abgasströmen beaufschlagt ist.

Damit ist für eine Mehrzahl von Startkatalysatoren nur ein gemeinsamer Wabenkörper erforderlich, der kostengünstiger herstellbar ist als mehrere kleine Wabenkörper, einfacher montierbar ist und die Wärme besser hält.

Der die Startkatalysatoren bildende Wabenkörper kann einen in der Form beliebigen, an die Einbauverhältnisse angepaßten Querschnitt aufweisen, wobei die Trennwände an Einlaufteil und Endteil den Querschnitt in gleich große Flächen beliebiger Form aufteilen.

Die Trennwände sind bezogen auf den Querschnitt des Wabenkörpers vorteilhaft gewellt ausgeführt, um die unterschiedliche Wärmedehnung zwischen Gehäuse und Wabenkörper ohne Spannungen ausgleichen zu können.

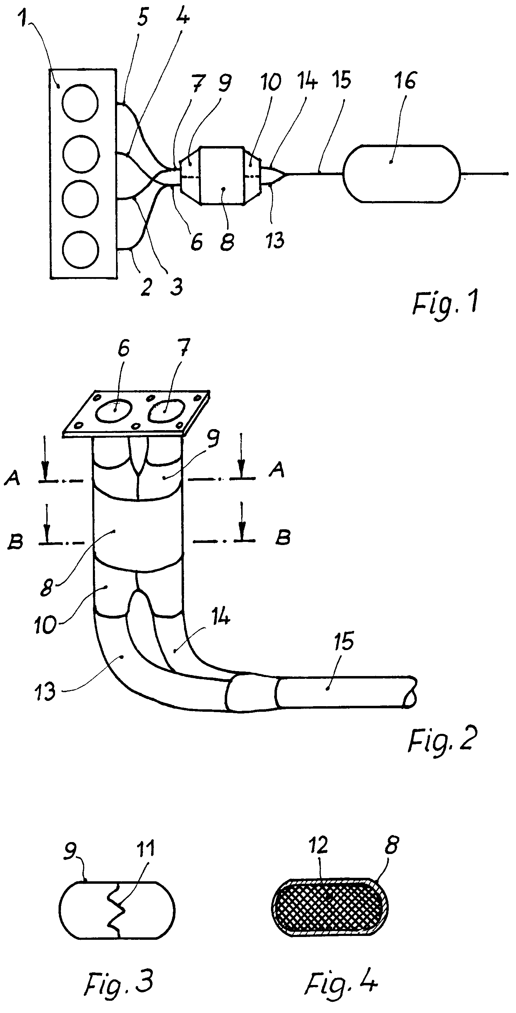

Ein Ausführungsbeispiel der Erfindung ist nachstehend anhand einer Zeichnung näher beschrieben. Es zeigen
- Fig. 1:: eine Abgasanlage einer Brennkraftmaschine mit vier in Reihe angeordneten Zylindern;
- Fig. 2:: ein Gehäuse mit Startkatalysator;
- Fig. 3:: einen Schnitt entlang der Linie A - A in Figur 2;
- Fig. 4:: einen Schnitt entlang der Linie B - B in Figur 2.

Am Zylinderkopf 1 einer Vierzylinder-Reihen-Brennkraftmaschine ist ein Abgaskrümmer mit ausgehenden Abgasleitungen 2, 3, 4, 5 befestigt. Jeweils zwei Abgasleitungen 2 und 4 bzw. 3 und 5 vereinigen sich zu je einem Abgas-Leitungsstrang 6 bzw. 7. Am Abgaskrümmer ist ein Gehäuse 8 mit einem Einlaufteil 9 und einem Endteil 10 so angeflanscht, daß die Leitungsstränge 6 und 7 getrennt in das Einlaufteil 9 einlaufen. Im Gehäuse 8 befinden sich die durch einen gemeinsamen Wabenkörper gebildeten Startkatalysatoren 12. Im Einlaufteil 9 ist eine Trennwand 11 angeordnet, welche die Abgasströme aus den Leitungssträngen 6 und 7 getrennt auf die Stirnseite der Startkatalysatoren 12 leitet. Jeder der beiden Leitungsstränge 6 und 7 beaufschlagt so nur einen Teil des Querschnittes des Wabenkörpers, der so für jeden der beiden Gasströme als getrennter Startkatalysator wirkt.

Im Endteil 10 befindet sich gleichermaßen wie im Einlaufteil 9 eine Trennwand, so daß der Abgasstrom in zwei getrennten Rohren 13, 14 bis zu einem gemeinsamen Abgasrohr 15 geführt werden kann, in dessen Verlauf ein Hauptkatalysator 16 angeordnet ist. Damit kann die Vorrohrtrennung für besseren Drehmomentgewinn über die Startkatalysatoren 12 hinaus trotz nur eines Wabenkörpers für die Startkatalysatoren 12 ausgedehnt werden.

Selbstverständlich können die Startkatalysatoren 12 auch aus mehreren Segmenten eines Wabenkörpers zusammengesetzt sein, die sich dann mit ihren Seitenflächen innerhalb des Gehäuses 8 berühren, so daß über diese Berührungsflächen keine Wärmeverluste nach außen auftreten.

Die Startkatalysatoren 12 können in an sich bekannter Weise auch mit jeweils einem Zentralkanal für jede der Abgas-Leitungsstränge 6 und 7 und mit diese schaltenden Klappen im Einlaufteil 9 oder im Endteil 10 des Gehäuses 8 ausgerüstet sein, um die Startkatalysatoren 12 bei erreichter Betriebstemperatur der Abgasanlage und Lastbetrieb der Brennkraftmaschine vor Zerstörung durch Überhitzen zu schützen, indem dann die Abgase die Startkatalysatoren 12 durch die Zentralkanäle passieren.

## Patentansprüche

1. Abgasanlage einer Mehrzylinder-Brennkraftmaschine` deren Abgase zumindest während der Startphase wirkende Startkatalysatoren und einen Hauptkatalysator durchströmen, wobei die Abgase in Nähe der Zylinder in zumindest zwei auf Zylindergruppen aufgeteilten Leitungssträngen geführt sind, in welche die Startkatalysatoren eingesetzt sind und die sich zu einem gemeinsamen Abgasrohr vereinen, in welchem der Hauptkatalysator eingesetzt ist, **dadurch gekennzeichnet**, daß die Startkatalysatoren (12) in der Vereinigungsstelle der Leitungsstränge (6, 7) als Wabenkörper in einem gemeinsamen Gehäuse (8) angeordnet sind, welches in einem Einlaufteil (9) die Teilströme des Abgases aus den Leitungssträngen (6, 7) durch im Einlaufteil (9) angeordnete Trennwände (11) auf eine Stirnseite des Wabenkörpers aufteilt und durch ein gleichfalls mit Trennwänden versehenes Endteil (10) getrennt von der anderen Stirnseite des Wabenkörpers abnimmt.

2. Abgasanlage nach Anspruch 1, **dadurch gekennzeichnet**, daß die im Gehäuse (8) angeordneten Startkatalysatoren (12) von einem einzigen Wabenkörper gebildet sind, welcher von durch das Einlaufteil (9) des Gehäuses (8) sowie durch das Endteil (10) mit voneinander getrennten Abgasströmen aus den Leitungssträngen (6, 7) beaufschlagt ist.

3. Abgasanlage nach Anspruch 1 und 2, **dadurch gekennzeichnet**, daß der bzw. die Wabenkörper der Startkatalysatoren (12) eine beliebige Querschnittsfläche aufweisen, welche durch die Trennwände (11) an Einlaufteil (9) und Endteil (10) in gleich große Flächen beliebiger Form aufgeteilt ist.

4. Abgasanlage nach Anspruch 1 bis 3, **dadurch gekennzeichnet**, daß die Trennwände (11) gewellt ausgeführt sind.
